# EUROPÄISCHE PATENTSCHRIFT

(11) **EP 1 770 303 B1**
(45) Veröffentlichungstag und Bekanntmachung des Hinweises auf die Patenterteilung: **01.07.2015**
(21) Anmeldenummer: 06016687.3
(22) Anmeldetag: 10.08.2006
(51) Int. Cl.: F16F 13/14

(54) **Elastomerlager mit hydraulischer Dämpfung**
Elastomeric mounting with hydraulic damping
Support en élastomère à amortissement hydraulique

(30) Priorität: 30.09.2005 DE 102005047018
(43) Veröffentlichungstag der Anmeldung: 04.04.2007
(73) Patentinhaber: TrelleborgVibracoustic GmbH, 64293 Darmstadt (DE)
(72) Erfinder: Pelz, Peter, 22769 Hamburg (DE); Jaschke, Heinz-Günther, 21077 Hamburg (DE); Ehlbeck, Dieter, 23714 Bad Malente (DE)
(74) Vertreter: Flügel Preissner Kastel Schober

(56) Entgegenhaltungen:
- DE-A1- 2 240 157
- DE-C1- 4 137 692
- DE-C2- 3 745 115
- US-A- 4 700 934
- US-A1- 2004 239 020

## Beschreibung

### Technisches Gebiet

Die Erfindung betrifft ein Elastomerlager mit hydraulischer Dämpfung aus einem Lagerkern, einer Lagerhülse und einer zwischen Lagerkern und Lagerhülse angeordneten Tragfeder aus einem Elastomerkörper und wenigstens zwei mit Flüssigkeit gefüllten Arbeitskammern, die über mindestens einen Strömungskanal miteinander verbunden sind, und bei dem die Freiwege des Lagers durch zwischen der Lagerhülse und der Tragfeder in die Kammern eingefügte als Einlegeteile ausgebildete Endanschläge begrenzt sind.

Elastomerlager mit hydraulischer Dämpfung , auch Hydrobuchsen genannt, werden für vielfältige Zwecke eingesetzt. Die Lager sind so ausgelegt, dass sie in entgegengesetzten Richtungen wirkende Kräfte aufnehmen können. Die Hauptkraft wird dabei von dem zwischen dem Lagerkern und der Lagerhülse angeordneten Elastomerkörper aufgenommen. Hochfrequente Schwingungen, die beispielsweise vom Motor eines Fahrzeugs herrühren können bzw. über die Straße in das Fahrwerk eingeleitet werden, werden durch die in den Arbeitskammern enthaltene Flüssigkeit bei ihrem Durchfluss durch die Strömungskanäle gedämpft. Besonders große Schwingungsausschläge werden durch Endanschläge begrenzt.

Bevorzugt werden diese Elastomerlager als Fahrwerkslager verwendet und zwar zur Bedämpfung von Schwingungen in Folge von Unwuchterregungen an der in Fahrtrichtung vorderen Achse von Personenkraftwagen. In den meisten Fällen ist es am wirkungsvollsten, das Lager als Verbindungselement zwischen der in Fahrtrichtung hinteren Strebe und dem Fahrzeugaufbau anzubringen. Bei frontgetriebenen Fahrzeugen wird in Folge des Antriebsmomentes eine Zugkraft über diese Strecke eingeleitet. Beim Abbremsen werden erhebliche Druckkräfte über diese Strebe und damit auch über das Lager geleitet. Diese Druckkräfte erreichen Spitzenwerte von 30 kN bei schweren Fahrzeugen. Es ist Vorsorge dafür zu treffen, dass diese Druckkräfte das Fahrwerkslager nicht beschädigen. Die Lager werden deshalb so ausgelegt, dass im frei rollenden Zustand des Fahrzeugs, bei dem nur eine vergleichsweise kleine Widerstandskraft überwunden werden muss, die Einfederung kleiner als der Freiweg bis zum Anschlag ist. Beim Beschleunigen oder Bremsen steigen die Kräfte jedoch so stark, dass der Federweg größer als der Freiweg ist, so dass ein Anschlagen erfolgt. Dieses hat häufig eine Geräuschentwicklung zur Folge. Um dieses zu vermeiden, kann der Anschlag sehr weich ausgeführt werden, was jedoch eine Verringerung seiner Lebensdauer zur Folge hat.

### Stand der Technik

Durch die DE 43 07 559 A1 ist eine elastische Lagerbuchse bekannt geworden, welche zur zusätzlichen Dämpfung von Schwingungen mit großer Amplitude innerhalb der Federräume oberhalb und unterhalb des Elastomerkörpers an der äußeren Lagerhülse festgelegte und bis in die Nähe des Innenteils ragende elastische und angenähert topfförmig ausgebildete Anschläge hat, die zwischen sich und der Lagerhülse flüssigkeitsgefüllte Kammern einschließen, die über Kanäle miteinander verbunden sind.

Eine andere Möglichkeit zur Dämpfung von Schwingungsamplituden, die über eine Größe der Auslenkung hinausgehen und eine Dämpfung mit bestimmter progressiver Dämpfungscharakteristik ergeben, ist in der DE 196 26 535 A1 dargestellt. Dort ist zwischen dem Lagerkern und der Innenwandung der Lagerhülse in wenigstens einer der Kammern ein im Wesentlichen unelastischer hydraulisch abgestützter Verdrängungskörper angeordnet, der im unbelasteten Zustand einen vorgegebenen Abstand zu einer Bezugsfläche aufweist und zwischen dem Verdrängungskörper und einem diesen tragenden Bauteile eine Verdrängungskammer von geringer Höhe zwischen den Verdrängungsflächen bildet, die über mindestens eine Drosselöffnung mit einer der weiteren Flüssigkeitskammern in Verbindung steht. Ein solches Lager ist relativ aufwendig in seiner Herstellung. Ähnliche Ausführungsformen zu der voran stehend geschilderten, sind den DE 103 50 994 A1 und DE 103 51 069 A1 zu entnehmen.

Die EP 0 384 007 B1 zeigt eine Hülsengummifeder mit hydraulischer Dämpfung, bei der in den Arbeitskammern Anschlagpuffer vorgesehen sind, welche den Freiweg des Lagers begrenzen.

Durch die US 2004/0239020 A1 ist auch ein hydraulisches Elastomerlager bekannt geworden, bei dem der Strömungskanal zwischen den Arbeitskammern durch zwei Einlegeteile gebildet ist, an denen jeweils ein aus Gummi bestehender Anschlag angebracht ist, der mit einer Versteifungsplatte versehen ist.

### Darstellung der Erfindung

Der Erfindung liegt die Aufgabe zu Grunde, ein Elastomerlager mit hydraulischer Dämpfung zu schaffen, das insbesondere bei Fahrzeugen eingesetzt werden kann, eine hohe Lebensdauer hat und bei dem es auch bei einer großen Amplitude der Schwingungen zu keiner Geräuschentwicklung kommt.

Die Lösung der gestellten Aufgabe wird mit dem Merkmalen des Anspruchs 1 erreicht. Die Merkmale der Ansprüche 2 bis 15 stellen vorteilhafte Weiterbildungen des Erfindungsgegenstandes dar.

Bei dem vorliegenden Lager wird in wenigstens einer der Arbeitskammern ein Einlegeteil angeordnet, das zwischen der Lagerhülse und dem Elastomerkörper eingefügt wird. Dieses Einlegeteil kann unabhängig von den anderen Lagerteilen hergestellt werden, so dass seine Wirkungsweise sehr individuell eingestellt werden kann. So kann seine Dämpfungswirkung durch Wahl der verwendeten Materialien auf die am Lager gegebenen Verhältnisse sehr genau eingestellt werden. Beispielsweise kann auch die Gleitpaarung gezielt gewählt werden.

Die Ausbildung des Einlegeteils kann unterschiedlich an die Lagerform angepasst werden. Bevorzugt wird jedoch das Einlegeteil durch eine Außenschale sowie eine Innenschale gebildet, die über sich axial erstreckende Stege aus elastomerem Material miteinander verbunden sind. Durch die Verwendung von Einlegeteilen wird eine Zweiteilung des Freiwegs des Lagers erreicht. In einen ersten Freiweg zwischen der äußeren Wand des Lagerkerns und der Innenwand der Innenschale des Einlegeteils und einen weiteren Freiweg zwischen der äußeren Wand der Innenschale und der inneren Wand der Außenschale. Diese Zweiteilung kann in beiden Richtungen der auf das Lager einwirkenden Kräfte vorgenommen werden, indem in jede Arbeitskammer ein Einlegeteil eingeführt wird. Die Außenschale wird halbkreisförmig ausgebildet und in axialer Richtung zwischen die Seitenwände der Arbeitskammer eingesetzt. Dabei liegt die Außenschale mit ihrer Außenwandung bündig an der Innenwand der Lagerhülse an. Die Innenschale ihrerseits ist von sattelförmiger Gestalt und ist mit einem verstärkten Mittelbereich versehen.

Um eine möglichst geringe Kontaktreibung zwischen der Innenschale und dem Lagerkern zu erreichen und dadurch den Verschleiß des Anschlags zu minimieren, ist der Lagerkern im Anschlagbereich radial und axial gewölbt. Außerdem kann diese Stelle mit einer Elastomerschicht überzogen.

Ein Überzug mit einer dünnen Elastomerschicht ist auch an den einander zugewandten und zwischen den Stegen des Einlegeteils liegenden Teilflächen der Schalen vorgesehen.

Die Arbeitskammern des Lagers sind über ein in der Außenschale untergebrachten Kanal miteinander verbunden. Bevorzugt wird in jede Arbeitskammer ein Endanschlag eingefügt. Die Arbeitskammern ihrerseits sind in axialer Richtung durch Blähwände abgeschlossen. Diese Blähwände erlauben die Pumpbewegung der Kammern und den damit bewirkten Flüssigkeitsdurchfluss durch den Strömungskanal. Zur sicheren Befestigung der Blähwände mit den Lagerhülsen haben dieselben an ihren radialen Endstücken steife Endringe. Durch eine axiale Vorspannung der Blähwände werden die Endringe an die Außenschale der Einlegeteile angedrückt, so dass eine flüssigkeitsdichte Verbindung entsteht. Auch werden die Achsen des Lagerkerns und der Lagerhülse im unbelasteten Zustand des Lagers exzentrisch zueinander ausgerichtet.

### Kurzbeschreibung der Zeichnung

Anhand eines in der Zeichnung dargestellten Ausführungsbeispiels wird die Erfindung nachstehend erläutert.

Es zeigt
- Fig. 1: das Elastomerlager im Längsschnitt,
- Fig. 2: das Lager im Querschnitt gemäß der Linie A-A der Fig. 1 und
- Fig. 3: das Lager im Querschnitt gemäß der Linie B-B der Fig. 1.

### Ausführung der Erfindung

Das Elastomerlager 1 besteht aus dem Lagerkern 2, der äußeren Lagerhülse 3 und dem dazwischen angeordneten und als Tragfeder wirkenden Elastomerkörper 4. Beiderseits des Elastomerkörpers 4 sind die mit Flüssigkeit gefüllten Arbeitskammern 5 und 6 vorgesehen. Dabei kommt die Arbeitskammer 5 während des Beschleunigungsvorgangs zum Einsatz und die Arbeitskammer 6 während des Bremsvorgangs. Beide Arbeitskammern 5 und 6 sind über den Strömungskanal 7 miteinander verbunden. Die Achse 8 des Lagerkerns 2 ist gegenüber der Achse 9 der Lagerhülse 3 im unbelasteten Zustand des Lagers exzentrisch zueinander angeordnet.

In jede Arbeitskammer 5, 6 ist zwischen der Lagerhülse 3 und dem Elastomerkörper 4 mit Kern 2 ein separates Einlegeteil 10 eingefügt. Dieses Einlegeteil 10 wird durch eine Außenschale 11, eine Innenschale 12 und die sich axial erstreckenden Stege 13 aus einem elastischem Material gebildet. Die Außenschale 11 kann aus einem thermoplastischen Kunststoff hergestellt sein. Ein metallischer Druckguß oder die Verwendung anderen Materials ist jedoch auch möglich. Auf ihren Außenseiten sind sie die Außenschalen 11 in Umfangsrichtung mit den Kanälen 7 versehen, welche die beiden Kammern 5, 6 miteinander verbinden. Das Strömungsmittel wird hier in den Strömungskanälen 7 als Dämpfungsmasse verwendet. Die Innenschale 12 kann aus dem gleichen Material wie die Außenschale 11 hergestellt werden. Während die Außenschale 11 halbkreisförmig ausgebildet ist und in axialer Richtung sich zwischen den Seitenwänden 14 der Arbeitskammern 5, 6 erstreckt, sind die Innenschalen 12 von sattelförmiger Gestalt mit einem verstärkten Mittelbereich 15. Die Außenschale 11 liegt mit ihrer Außenwand bündig an der Lagerhülse 3 an. Der Innenradius R der Innenschale 12 wird größer gewählt als der Außenradius r des Lagerkerns 2, so dass die zur Anlage kommenden Teile von Lagerkern 2 und Innenschale 12 eine möglichst geringe Fläche überdecken. Zur Unterstützung dieses Vorgangs ist der Lagerkern 2 im Anschlagbereich zur Innenschale 12 auch axial ausgewölbt. Außerdem ist der Lagerkern 2 im Anschlagbereich mit einer Elastomerschicht 16 überzogen. Eine entsprechende Elastomerschicht 17 ist auch an den einander zugewandten zwischen den Stegen 13 liegenden Teilflächen der Schalen 11 und 12 vorhanden. Die Seitenwände 14 der Arbeitskammern 5, 6 sind als Blähwände ausgebildet, d.h. unter starker Belastung geben sie dem Innendruck der Flüssigkeit in den Kammern 5, 6 nach und knicken nach innen ein. Dieser Vorgang wird durch die nach innen gerichtete Auswölbung der Blähwände 14 begünstigt. Dabei kommen die Blähwände 14 an den axialen Randflächen der Innenschalen 12 zur Anlage und rollen bei weiterer Einfederung daran ab. Die radialen Endstücke 26 der Blähwände 14 sind mit steifen Endringen 19 aus einem Kunststoff oder Metall versehen. Während der Montage des Lagerkerns 2 mit Tragfeder 4 und den Einlegeteilen 10 in die Lagerhülse 3, werden die Innenteile des Lagers 1 axial vorgespannt. Dieses geschieht durch Einpressen der Innenteile des Lagers in die Lagerhülse 3, wobei die axialen Enden der Lagerhülse 3 umgebördelt werden.

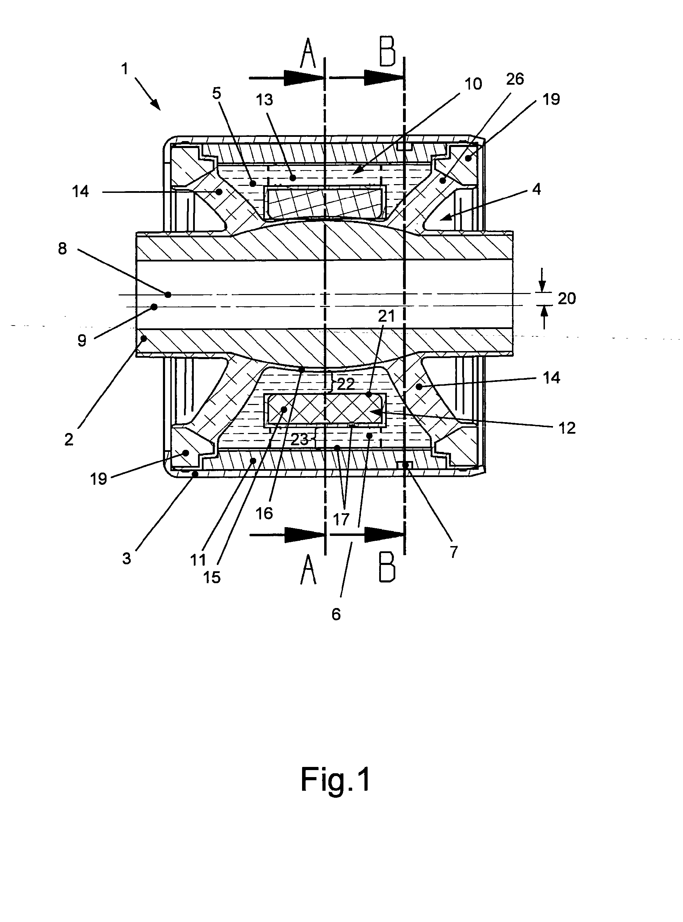

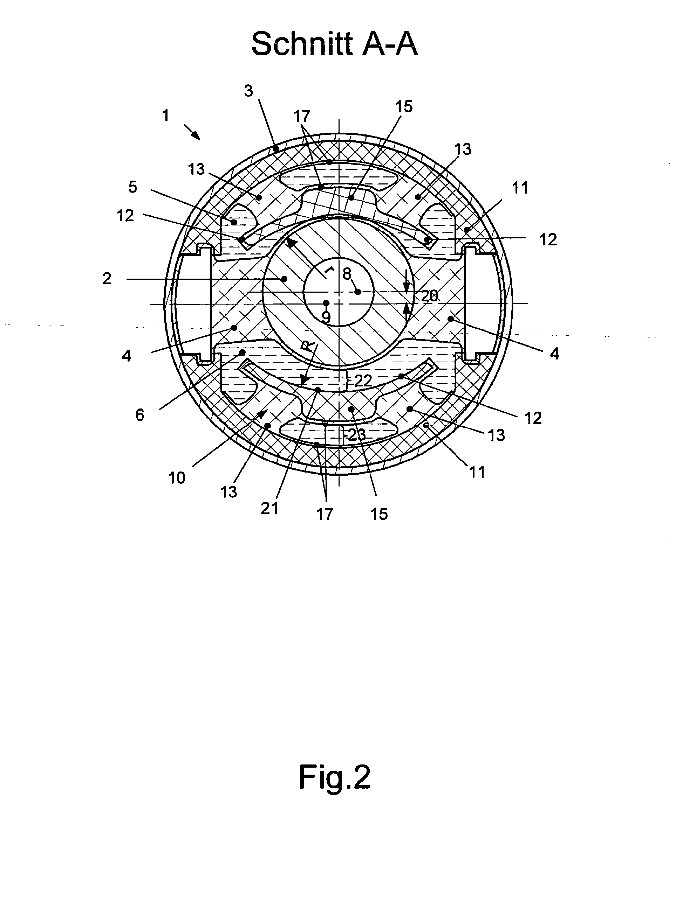

In den Figuren 1 und 2 ist das Lager jeweils in unbelastetem Zustand eingezeichnet. In diesem Fall liegen die Achsen 8 und 9 von Lagerkern 2 und Lagerhülse 3 mit dem Abstand 20 zueinander. Der Elastomerkörper 4 hält den Lagerkern 2 in der gezeigten Position. Dabei liegt der Lagerkern 2 mit seiner durch die Elastomerschicht 16 gebildeten Außenwandung im Anschlagbereich des Lagers an der Innenwand 21 der oberen Innenschale 12 an. Am unteren Teil der Figuren ist zwischen dem Lagerkern 2 und der Innenwand 21 der Innenschale 12 dann der Freiweg 22 vorhanden. Dieser Freiweg 22 wird bei einer Belastung des Lagers jedoch etwa um die Hälfte reduziert, nämlich um den Abstand 20 zwischen den Achsen 8 und 9, die bei Belastung etwa übereinander zu liegen kommen. Es ist dann sowohl im oberen Teil der Figuren als auch im unteren Teil der Figuren ein etwa gleicher Freiweg 22 vorhanden, welcher dem Federweg bei normalem Betrieb des Lagers entspricht. Je nach Amplitude der Schwingung federt das Lager zwischen dem Lagerkern 2 und der Innenschale 12. Dabei erfolgt gleichzeitig eine Dämpfung von Schwingungen über den Strömungskanal 7 zwischen den beiden Arbeitskammern 5 und 6. Sobald die Schwingungsamplitude den Freiweg 22 überschreitet, wird das betroffene Einlegeteil 10 wirksam. Der an der Innenwand 21 der Innenschale 12 anliegende Lagerkern 2 drückt die Innenschale 12 radial nach außen und es erfolgt eine Verringerung des weiteren Freiwegs 23, der durch den Abstand der durch die Elastomerschichten 17 überdeckten Wandbereiche zwischen Innenschale 12 und Außenschale 11 des Lagers gebildet ist. Die Stege 13 werden zusammengedrückt und zwar so lange, bis die beiden Elastomerschichten 17 und damit die Innenschale 12 und Außenschale 11 aneinander anliegen, wodurch der Endanschlag erreicht ist. Die Materialwahl für die Stege 13 und auch deren konstruktive Ausbildung wird so gewählt, dass der gewünschte weiche Anstieg beim Endanschlag mit zunehmender Kraft erreicht wird. Auf diese Weise wird ein äußerst hoher Fahrtkomfort erzielt.

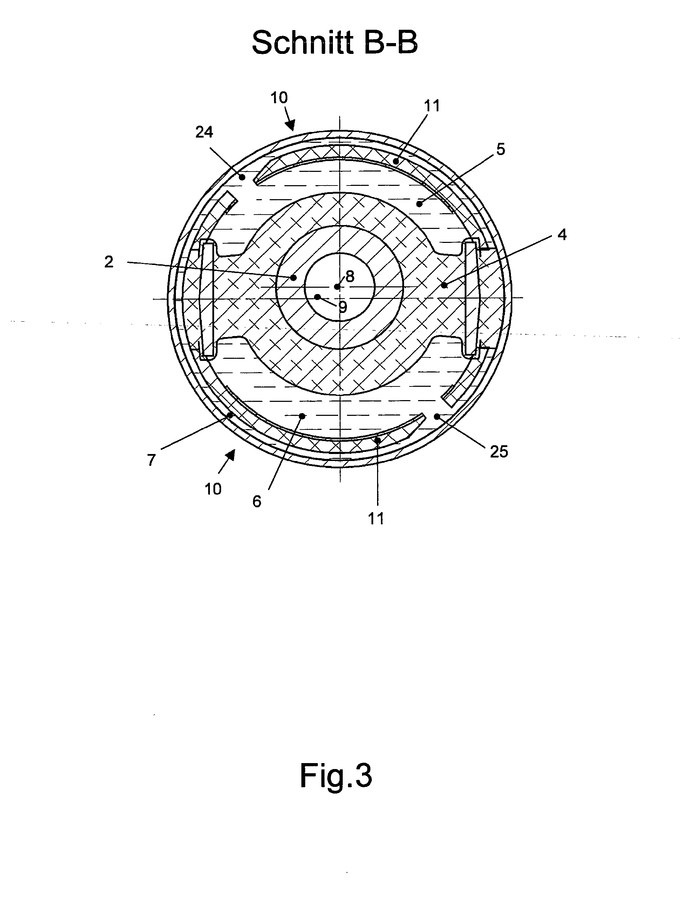

In der Fig. 3 ist der Verlauf des Strömungskanals 7 wiedergegeben. Über die Öffnungen 24 und 25 ist der Strömungskanal 7 mit den Arbeitskammern 5 und 6 verbunden. Die Einlegeteile 10 sind in vorliegendem Falle identisch ausgebildet und symmetrisch zueinander angeordnet.

Im Rahmen des Erfindungsgedankens kann es vorteilhaft sein, wenn die Außenschale und die Stege aus dem gleichen elastomeren Material sind. Der Vulkanisationsvorgang wird dadurch vereinfacht. Die Gummikontur übernimmt dann die Funktion der Außenschale.

## Patentansprüche

1. Elastomerlager mit hydraulischer Dämpfung aus einem Lagerkern (2), einer Lagerhülse (3), einer zwischen Lagerkern (2) und Lagerhülse (3) angeordneten Tragfeder (4) aus einem Elastomerkörper und wenigstens zwei mit Flüssigkeit gefüllten Arbeitskammern (5, 6), die über mindestens einen Strömungskanal (7) miteinander verbunden sind, und bei dem die Freiwege (22) des Lagers (1) durch zwischen der Lagerhülse (3) und der Tragfeder (4) in die Kammern (5, 6) eingefügte als Einlegeteile (10), ausgebildete Endanschläge begrenzt sind, **dadurch gekennzeichnet, dass** die Einlegeteile (10) durch eine Außenschale (11) sowie eine Innenschale (12) gebildet sind, die über sich axial erstreckende Stege (13) aus elastomerem Material miteinander verbunden sind, wobei die Stege (13) jeweils einen Wandbereich (17) zwischen Außenschale (11) und Innenschale (12) einfassen, so dass der Freiweg des Lagers (1) aus einem ersten Freiweg (22) zwischen der äußeren Wand (16) des Lagerkerns (2) und der Innenwand (21) der Innenschale (12) und einem weiteren Freiweg (23) zwischen der äußeren Wand (17) der Innenschale (12) und der inneren Wand (17) der Außenschale (11) des jeweiligen Einlegeteils (10) besteht.

2. Elastomerlager nach Anspruch 1, **dadurch gekennzeichnet, dass** die Außenschale (11) halbkreisförmig ausgebildet ist und sich in axialer Richtung zwischen den Seitenwänden (14) der Arbeitskammern (5, 6) erstreckt.

3. Elastomerlager nach Anspruch 2, **dadurch gekennzeichnet, dass** die Außenschale (11) mit ihrer Außenwand bündig in die Lagerhülse (3) einsetzbar ist.

4. Elastomerlager nach einem der Ansprüche 1 bis 3, **dadurch gekennzeichnet, dass** die Innenschale (12) von sattelförmiger Gestalt mit einem Innenradius (R) größer als der Außenradius (r) des Lagerkerns (2) ist und einen verstärkten Mittelbereich (15) hat.

5. Elastomerlager nach einem der Ansprüche 1 bis 4, **dadurch gekennzeichnet, dass** der Lagerkern (2) im Anschlagbereich radial und axial gewölbt ist.

6. Elastomerlager nach Anspruch 5, **dadurch gekennzeichnet, dass** der Lagerkern (2) im Anschlagbereich mit einer Elastomerschicht (16) überzogen ist.

7. Elastomerlager nach einem der Ansprüche 1 bis 6, **dadurch gekennzeichnet, dass** die einander zugewandten und zwischen den Stegen (13) liegenden Teilflächen der Schalen (11, 12) jeweils mit einer dünnen Elastomerschicht (17) überzogen sind.

8. Elastomerlager nach einem der Ansprüche 1 bis 7, **dadurch gekennzeichnet, dass** die Arbeitskammern (5, 6) über einen in der Außenschale (11) untergebrachten Kanal (7) miteinander verbunden sind.

9. Elastomerlager nach einem der Ansprüche 1 bis 8, **dadurch gekennzeichnet, dass** die Arbeitskammern (5, 6) in axialer Richtung durch Blähwände (14) abgeschlossen sind.

10. Elastomerlager nach Anspruch 9, **dadurch gekennzeichnet, dass** die radialen Endstücke (26) der Blähwände (14) mit steifen Endringen (19) versehen sind.

11. Elastomerlager nach einem der Ansprüche 9 bis 10, **dadurch gekennzeichnet, dass** die Blähwände (14) axial vorgespannt sind.

12. Elastomerlager nach einem der Ansprüche 1 bis 11, **dadurch gekennzeichnet, dass** die Achse (8) des Lagerkerns (2) und die Achse (9) der Lagerhülse (3) im unbelasteten Zustand des Lagers (1) exzentrisch zueinander liegen.

13. Elastomerlager nach einem der Ansprüche 9 bis 11, **dadurch gekennzeichnet, dass** sichdie Innenseiten der Blähwände (14) beim Einfederungsvorgang an den axialen Randflächen der Innenschalen (12) abstützen und daran abrollen.

14. Elastomerlager nach einem der Ansprüche 1 bis 13, **dadurch gekennzeichnet, dass** die Außenschalen (11) und die zugehörigen Stege (13) integrale Elemente sind und aus dem gleichen elastomeren Material bestehen.

## Claims

1. An elastomer bearing with hydraulic damping consisting of a bearing core (2), a bearing sleeve (3), a suspension spring (4) which consists of an elastomer body and is disposed between the bearing core (2) and the bearing sleeve (3), and at least two working chambers (5, 6), which are filled with a liquid and are interconnected via at least one flow channel (7), and in which the clear paths (22) of the bearing (1) are delimited by end stops fitted into the chambers (5, 6) between the bearing sleeve (3) and the suspension spring (4) and configured as inserts (10), **characterised in that** the inserts (10) are formed by an outer shell (11) and an inner shell (12) that are connected to each other via axially extending webs (13) consisting of an elastomeric material, wherein the webs (13) enclose one wall portion (17), respectively, between the outer shell (11) and the inner shell (12), so that the clear path of the bearing (1) consists of a first clear path (22) between the outer wall (16) of the bearing core (2) and the inner wall (21) of the inner shell (12) and another clear path (23) between the outer wall (17) of the inner shell (12) and the inner wall (17) of the outer shell (11) of the respective insert (10).

2. The elastomer bearing according to claim 1, **characterised in that** the outer shell (11) is configured in a semi-circular shape and extends in the axial direction between the side walls (14) of the working chambers (5, 6).

3. The elastomer bearing according to claim 2, **characterised in that** the outer shell (11) can be inserted with its outer wall flush into the bearing sleeve (3).

4. The elastomer bearing according to any one of the claims 1 to 3, **characterised in that** the inner shell (12) has a saddle-shape with an inner radius (R) greater than the outer radius (r) of the bearing core (2) and has a reinforced central portion (15).

5. The elastomer bearing according to any one of the claims 1 to 4, **characterised in that** the bearing core (2) is radially and axially curved in the stop region.

6. The elastomer bearing according to claim 5, **characterised in that** the bearing core (2) is coated with an elastomer layer (16) in the stop region.

7. The elastomer bearing according to any one of the claims 1 to 6, **characterised in that** the partial surfaces of the shells (11, 12) that face each other and are located between the webs (13) are each coated with a thin elastomer layer (17).

8. The elastomer bearing according to any one of the claims 1 to 7, **characterised in that** the working chambers (5, 6) are connected to each other via a channel (7) disposed in the outer shell (11).

9. The elastomer bearing according to any one of the claims 1 to 8, **characterised in that** the working chambers (5, 6) are closed off in the axial direction by expanding walls (14).

10. The elastomer bearing according to claim 9, **characterised in that** the radial end portions (26) of the expanding walls (14) are provided with rigid end rings (19).

11. The elastomer bearing according to any one of the claims 9 to 10, **characterised in that** the expanding walls (14) are axially biased.

12. The elastomer bearing according to any one of the claims 1 to 11, **characterised in that** the axis (8) of the bearing core (2) and the axis (9) of the bearing sleeve (3), in the state of the bearing (1) being free from load, are located eccentrically relative to each other.

13. The elastomer bearing according to any one of the claims 9 to 11, **characterised in that**, during the compression process, the inner faces of the expanding walls (14) are supported by the axial peripheral faces of the inner shells (12) and roll thereon.

14. The elastomer bearing according to any one of the claims 1 to 13, **characterised in that** the outer shells (11) and the associated webs (13) are integral elements and consist of the same elastomeric material.

## Revendications

1. Support en élastomère avec amortissement hydraulique, formé d'un coeur de support (2), d'une douille de support (3), d'un ressort porteur (4), agencé entre le coeur de support (2) et la douille de support (3) et constitué d'un corps en élastomère est d'au moins deux chambres de travail (5, 6) remplies de liquide, qui sont reliées l'une à l'autre via au moins un canal d'écoulement (7), et dans lequel les débattements libres (22) du support (1) sont limités par des butées terminales introduites entre la douille de support (3) et le ressort porteur (4) dans les chambres (5, 6) et réalisées sous forme de pièces d'insert (10), **caractérisé en ce que** les pièces d'insert (10) sont formées par une coque extérieure (11) ainsi que par une coque intérieure (12) qui sont reliées l'une à l'autre via des barrettes (13) s'étendant axialement en matériau élastomère, dans lequel les barrettes (13) enserrent respectivement une zone de paroi (17) entre la coque extérieure (11) et la coque intérieure (12), de sorte que le débattement libre du support (1) est composé d'un premier débattement libre (22) entre la paroi extérieure (16) du coeur de support (2) et la paroi intérieure (21) de la coque intérieure (12), et d'un autre débattement libre (23) entre la paroi extérieure (17) de la coque intérieure (12) et la paroi intérieure (17) de la coque extérieure (11) de la pièce d'insert (10) respective.

2. Support en élastomère selon la revendication 1, **caractérisé en ce que** la coque extérieure (11) est réalisée en forme de demi-cercle et s'étend en direction axiale entre les parois latérales (14) des chambres de travail (5, 6).

3. Support en élastomère selon la revendication 2, **caractérisé en ce que** la coque extérieure (11) est susceptible d'être mise en place dans la douille de support (3) en affleurement avec sa paroi extérieure.

4. Support en élastomère selon l'une des revendications 1 à 3, **caractérisé en ce que** la coque intérieure (12) a une configuration en forme de selle avec un rayon intérieur (R) plus grand que le rayon extérieur (r) du coeur de support (2) et possède une zone médiane renforcée (15).

5. Support en élastomère selon l'une des revendications 1 à 4, **caractérisé en ce que** le coeur de support (2) est bombé radialement et axialement dans la zone de butée.

6. Support en élastomère selon la revendication 5, **caractérisé en ce que** le coeur de support (2) est revêtu d'une couche en élastomère (16) dans la zone de butée.

7. Support en élastomère selon l'une des revendications 1 à 6, **caractérisé en ce que** les surfaces partielles, tournées l'une vers l'autre et situées entre les barrettes (13), des coques (11, 12), sont respectivement revêtues d'une mince couche en élastomère (17).

8. Support en élastomère selon l'une des revendications 1 à 7, **caractérisé en ce que** les chambres de travail (5, 6) sont reliées l'une à l'autre via un canal (7) ménagé dans la coque extérieure (11).

9. Support en élastomère selon l'une des revendications 1 à 8, **caractérisé en ce que** les chambres de travail (5, 6) sont refermées en direction axiale par des parois gonflables (14).

10. Support en élastomère selon la revendication 9, **caractérisé en ce que** les pièces terminales radiales (26) des parois gonflables (14) sont dotées de bagues terminales rigides (19).

11. Support en élastomère selon l'une des revendications 9 à 10, **caractérisé en ce que** les parois gonflables (14) sont précontraintes axialement.

12. Support en élastomère selon l'une des revendications 1 à 11, **caractérisé en ce que** l'axe (8) du coeur de support (2) et l'axe (9) de la douille de support (3) sont disposés de manière excentrée l'un par rapport à l'autre dans l'état non chargé du support. (1).

13. Support en élastomère selon l'une des revendications 9 à 11, **caractérisé en ce que** les côtés intérieurs des parois gonflables (14) s'appuient, lors du processus de contraction élastique, contre les surfaces de bordure axiale des coques intérieures (12) et se déroulent contre celles-ci.

14. Support en élastomère selon l'une des revendications 1 à 13, **caractérisé en ce que** les coques extérieures (11) et les barrettes associées (13) sont des éléments intégraux et sont constituées du même matériau élastomère.
